# EUROPÄISCHE PATENTSCHRIFT

(11) **EP 1 174 247 B1**
(45) Veröffentlichungstag und Bekanntmachung des Hinweises auf die Patenterteilung: **01.03.2006**
(21) Anmeldenummer: 01116265.8
(22) Anmeldetag: 05.07.2001
(51) Int. Cl.: B29C 65/16, F02M 35/10

(54) **Verfahren zum Herstellen eines Luftsammlergehäuses aus Kunststoffteilen mittels Laser-Durchstrahlschweissung**
Process for the production of an air suction housing of plastics parts by laser irradiation welding
Procédé pour leproduction d'une boîte à l'air des pièces en matière synthétique au moyen de soudage par laser

(30) Priorität: 17.07.2000 DE 10034678
(43) Veröffentlichungstag der Anmeldung: 23.01.2002
(73) Patentinhaber: Bayerische Motoren Werke Aktiengesellschaft, 80809 München (DE); FÖRG, CHRISTIAN, 85664 HOHENLINDEN (DE)
(72) Erfinder: Carolin, Bernd, 80939 München (DE); Landersdorfer, Ulrich, 85368 Moosburg (DE); Perschl, Herbert, 82294 Oberschweinbach (DE); Förg, Christian, 85664 Hohenlinden (DE)

(56) Entgegenhaltungen:
- EP-A- 0 391 521
- DE-A- 3 219 699
- DE-A- 19 636 670
- DE-A- 19 916 786
- FR-A- 2 165 906
- PATENT ABSTRACTS OF JAPAN vol. 009, no. 194 (M-403), 10. August 1985 (1985-08-10) -& JP 60 060497 A (HITACHI SEISAKUSHO KK), 8. April 1985 (1985-04-08)
- PATENT ABSTRACTS OF JAPAN vol. 1996, no. 06, 28. Juni 1996 (1996-06-28) -& JP 08 035789 A (CHIYODA CORP), 6. Februar 1996 (1996-02-06)
- PATENT ABSTRACTS OF JAPAN vol. 2000, no. 23, 10. Februar 2001 (2001-02-10) -& JP 2001 152985 A (TOYOTA MOTOR CORP), 5. Juni 2001 (2001-06-05)

## Beschreibung

Die Erfindung bezieht sich nach dem Oberbegriff des Patentanspruches 1 auf ein Verfahren zum Herstellen eines Luftsammlergehäuses aus Kunststoffteilen mittels Laser- Durchstrahlschweißung.

Bekanntlich werden Luftsammlergehäuse für Kraftmaschinen einschließlich baulich integrierter Lufttrichter, insbesondere in der Ausgestaltung als Schwingrohre, zur Erzielung eines geringen Baugewichtes jeweils aus einem Kunststoff gebildet, wobei die Gestaltung der Verbindung von einander durchdringenden, unterschiedlich gestalteten Kunststoffteilen von besonderem Interesse ist.

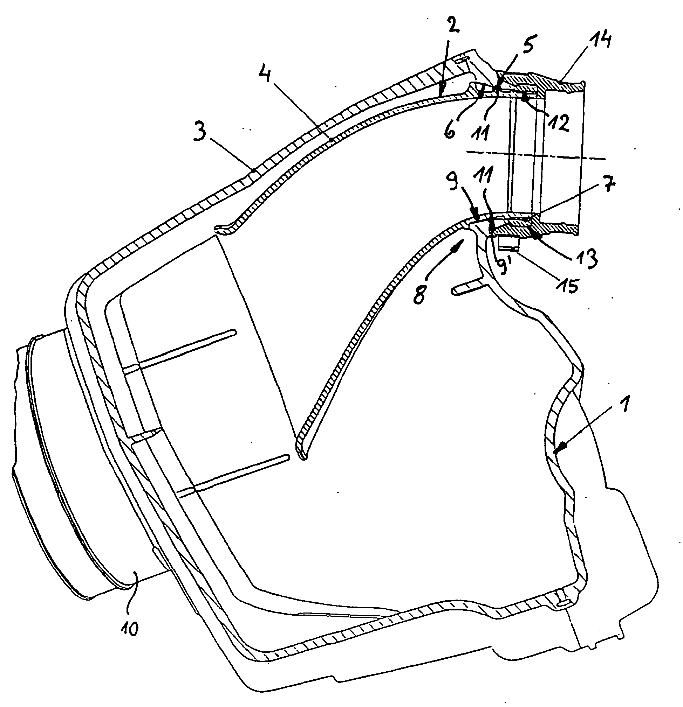

In dem Dokument Patent Abstracts of Japan, vol 009, no.194, (M-403) (10.8.1985) & JP-A- 60 060497 ist anhand der einzigen Figur des Abstracts das Verschweißen eines Rohres mit einer Wandung gezeigt und beschrieben, wobei ein Rohr über eine Durchbrechung eine Wandung durchsetzend angeordnet wird und hierauf das rohrartige Teil außenumfänglich in der Durchbrechung mit einem die Wandung des rohrartigen Teiles von innen nach außen durchstrahlenden Laserstrahl stoffschlüssig verbunden wird.

Ferner ist aus dem deutschen Patent DE 32 19 699 C2 ein für eine Brennkraftmaschine dienendes, aus Kunststoff gefertigtes Luftsammlergehäuse bekannt mit in dessen Innerem angeordneten Lufttrichtern bzw. Schwingrohren, die zur Brennkraftmaschine anschlussseitig einen Wandabschnitt über Durchbrechungen des Sammlergehäuses durchsetzend angeordnet werden. Das Gehäuse des Luftsammlers wird im Blasverfahren um das von dem Gehäuse zu umschließenden Teil der Lufttrichter herum geformt und auf deren anschlussseitigen Enden zur jeweiligen Fixierung aufgeschrumpft. Zweckmäßig ist diese Gestaltung bei einfach geformtem Luftsammlergehäuse.

Soll das Luftsammlergehäuse dagegen an seiner Außenseite mit einem Zusatzbehältnis ausgebildet werden, wie dies beispielsweise aus der deutschen Offenlegungsschrift DE 102 17 617 A1 bekannt ist, kann es aus Herstellungsgründen zweckmäßig sein, das Sammlergehäuse zumindest zweiteilig auszubilden und die Lufttrichter bzw. Schwingrohre gesondert in einem der Sammlergehäuseteile anzuordnen. Diese Bauart ist z. B. aus der deutschen Patentschrift DE 25 27 774 C2 per se bekannt.

Der Erfindung liegt die Aufgabe zugrunde, für die Herstellung eines mehrteiligen, aus Kunststoff gebildeten Luftsammlergehäuses mit einem in dessen Innerem angeordneten, ebenfalls aus einem Kunststoff gefertigten Lufttrichter ein Verfahren aufzuzeigen, mit dem eine starre und dichte Verbindung zwischen dem Lufttrichter und einem Sammlergehäuseteil ohne Geometrieveränderungen mit in Strömungsrichtung stoßfreien Übergängen im Bereich der miteinander stoffschlüssig verbundenen Bauteile erzielt wird.

Diese Aufgabe ist mit dem Patentanspruch 1 gelöst.

Vorteil der Erfindung ist die Kombination einer der gasdichten Verbindung dienende Laser-Schweißverbindung mit einer verbleibend angeordneten Spanneinrichtung zur vorteilhaften Verteilung mechanischer Belastungen in beiden Kunststoffteilen. Weiter sind damit insbesondere die beiden dynamisch beanspruchten Kunststoffteile wie Luftsammlergehäuse und Lufttrichter in ihrer gegenseitigen Lage über den Laser-Schweißvorgang hinaus zusätzlich auf einfache Weise gesichert.

Eine durch einfachen Aufbau vorteilhafte Ausgestaltung mit hoher Betriebssicherheit bezüglich Dichtheit einerseits und starrer Verbindung andererseits ist gemäß einem weiteren Vorschlag dadurch erreicht, dass die Anschläge zumindest abschnittsweise mit einer kegelstumpfartigen Kontur ausgebildet werden, wobei die Kontaktfläche eines räumlich gekrümmten Lufttrichters an einem umlaufenden Ring angeordnet wird, dem jenseits der Durchbrechung am Lufttrichter ein Gewinde für eine zum Verbleib nach der Laser-Durchstrahlschweißung vorgesehene Überwurfmutter als Spanneinrichtung zugeordnet wird.
Mit dieser erfindungsgemäßen Ausgestaltung wird in vorteilhafter Weise mittels einer Schraubeinrichtung bei entsprechend gewähltem Kegelmantel der kegelstumpfartigen Konturen eine hohe Pressung zwischen den korrespondierenden Kontaktflächen erzielt, womit in weiterer vorteilhafter Weise eine Laserschweißung von hoher Qualität erzielt wird.

In weiterer Ausgestaltung des Herstellverfahrens wird vorgeschlagen, dass jeder Lufttrichter motoranschlussseitig mit einem gummiartigen Entkoppelungselement ausgerüstet wird, das mittels einer Schlauchschelle fixiert der Lagesicherung der als Überwurfmutter gestalteten Spanneinrichtung dient. Mit dieser Ausgestaltung wird ohne zusätzlichem Aufwand die Lagesicherung der Spanneinrichtung gewährleistet.

Das erfindungsgemäße Herstellverfahren für ein Luftsammlergehäuse ist anhand eines in der Zeichnung dargestellten Ausführungsbeispiels beschrieben.

Einander durchsetzend angeordnete Kunststoffteile 1 und 2 in der Ausgestaltung als Luftsammlergehäuse 3 und Lufttrichter 4 werden in einem Herstellverfahren mittels Laser-Durchstrahlverfahren im Bereich der Durchsetzung miteinander stoffschlüssig verbunden. Sammlergehäuse 3 und Lufttrichter 4 werden vor der Durchstrahlschweißung über korrespondierende Kontaktflächen 5 und 6 mittels einer Spanneinrichtung 7 gegeneinander verspannt, und diese Verspannung wird während der Laserschweißung aufrechterhalten.

Wie aus der einzigen Zeichnung ersichtlich, ist zumindest ein räumlich gekrümtes, rohrartiges Kunststoffteil 2 bzw. der Lufttrichter 4 das weitere, hohlgestaltete Kunststoffteil 1 bzw. das Luftsammlergehäuse 3 über eine Durchbrechung 8 durchsetzend angeordnet. Zur Erzielung einer einwandfreien Schweißverbindung zwischen den beiden Kunststoffteilen 1 und 2 bzw. 3 und 4 ist das rohrartige Kunststoffteil 2 bzw. 4 aussenumfänglich in der Durchbrechung 8 des weiteren Kunststoffteiles 1 bzw. 3 mit einem die Wandung des rohrartigen Kunstoffteiles 2 bzw. 4 von einem innen nach außen durchstrahlenden Laserstrahl stoffschlüssig verbunden.

Um bei dieser Anordnung von unterschiedlich gestalteten, insbesondere dynamisch beanspruchten Kunststoffteilen 1 und 2 bzw. 3 und 4 deren relative Lage zueinander über den Laser-Schweißvorgang hinaus zusätzlich auf einfache Weise zu sichern, ist eine an den Kunststoffteilen 1, 2 zum Verbleib nach der Laserschweißung gestaltete Spanneinrichtung 7 gewählt.

In bevorzugter Ausgestaltung weisen beide Kunstoffteile 1 und 2 bzw. 3 und 4 einerseits der Durchbrechung 8 in Bereichen korrespondierender Anschläge 9, 9' Kontaktflächen 5, 6 auf, die mittels einer andererseits der Durchbrechung 8 die beiden Kunststoffteile 1 und 2 bzw. 3 und 4 gegenseitig verspannend angeordneten, verbleibenden Spanneinrichtung 7 gegeneinander gepresst und dann lasergeschweißt sind.

Eine positionsgenaue Anordnung der Lufttrichter 4 in dem Luftsammlergehäuse 3 ist in vorteilhafter Weise dadurch erreicht, dass die Anschläge 9, 9' zumindest abschnittsweise eine kegelstumpfartige Kontur aufweisen, wobei die Kontaktfläche des räumlich gekrümten, rohrartigen Kunststoffteiles 2 bzw. 4 an einem umlaufenden Ring 11 ausgebildet ist, dem jenseits der Durchbrechung 8 im hohlgestalteten Kunststoffteil 1 am rohrartigen Kunstoffteil 2 bzw. 4 ein Gewinde 12 für eine Überwurfmutter 13 als Spanneinrichtung 7 zugeordnet ist.

Weiter ist aus der Zeichnung zu erkennen, dass jedes räumliche, als Lufttrichter 4 gestaltete Kunststoffteil 2 motoranschlussseitig mit einem gummiartigen Entkoppelungselement 14 zur akustischen und schwingungsdämpfenden Entkoppelung zwischen Luftsammlergehäuse 3 und nicht dargestellter Brennkraftmaschine ausgerüstet ist, wobei das Entkoppelungselement 14 mittels einer Schlauchschelle 15 fixiert der Lagesicherung der als Überwurfmutter 13 gestalteten Spanneinrichtung 7 dient.

Bei dem vorbeschriebenen Ausführungsbeispiel genügen eine formschlüssige Verbindung zwischen Lufttrichter 4 und Luftsammlergehäuse 3 über eine konische Zentrierung sowie eine kraftschlüssige Verbindung durch Zentralverschraubung mittels einer Überwurfmutter 13 bezüglich Dauerhaltbarkeit und Dichtigkeit wegen des bekannten Kriechverhaltens von Kunststoffen unter Temperatur- und Krafteinwirkung alleine nicht, so dass zusätzlich ein Laserschweißverfahren hinzutritt zur stoffschlüssigen Verbindung des Lufttrichters 4 mit dem Luftsammlergehäuse 3. Für eine hohe Schweißnahtgüte ist neben der vorgeschlagenen Laser-Durchstrahlschweißung eine gleichmäßige Pressung der korrespondierenden Kontaktflächen 5, 6 unerlässlich, die mittels der Überwurfmutter 13 in den kegeligen Kontaktflächen 5 und 6 jedoch auf einfache Weise erzielt ist.

Als Spanneinrichtung 7 können neben der aus Kunststoff gebildeten Überwurfmutter 13 auch gewellte Federringe oder tellerfederartige Ringe vorgesehen sein.

Mit der Erfindung ist in vorteilhafter Weise das Kriechverhalten von Kunstoffverbindungen vorteilhaft umgangen. Weiter sind bei hoher Prozesssicherheit zuverlässige Abdichtungen von Kunststoffverbindungen erzielt. Schließlich ergibt sich trotz Kostenreduzierung ein hoher konstruktiver Freiheitsgrad, wobei insbesondere mit dem Laser-Durchstrahlschweißen Geometrieveränderungen vermieden sind, was insbesondere bei durchströmten Kunststoffteilen von großem Vorteil ist.

## Patentansprüche

1. Verfahren zum Herstellen eines Luftsammlergehäuses aus Kunststoffteilen mittels Laser-Durchstrahlschweißung,
wobei ein rohrartiges Kunststoffteil (2) des Sammlergehäuses (3) ein weiteres, wandartiges Kunststoffteil (1) des Sammlergehäuses (3) im Wesentlichen spielfrei über eine Durchbrechung (8) im Kunststoffteil (1) durchsetzend angeordnet wird, und
die beiden Kunststoffteile (1,2) über stoffschlüssig zu verbindende Kontaktflächen (5,6) gegeneinander verspannt gehalten lasergeschweißt werden derart, dass
das rohrartige Kunststoffteil (2) außenumfänglich in der Durchbrechung (8) des wandartigen Kunststoffteiles (1) mit einem die Wandung des rohrartigen Kunststoffteiles (2) von innen nach außen durchstrahlenden Laserstrahl stoffschlüssig verbunden wird,
**dadurch gekennzeichnet,**
**dass** als wandartiges Kunststoffteil (1) ein aus zwei Teilen gebildetes Luftsammlergehäuse (3) für eine Brennkraftmaschine und als rohrartiges Kunststoffteil (2) ein ein gesondertes Gehäuseteil des Luftsammlergehäuses (3) über die Durchbrechung (8) durchsetzender Lufttrichter (4) gewählt wird mit einer jeweiligen Ausgestaltung derart, dass
beide Kunststoffteile (1,2 bzw. 3,4) einerseits der Durchbrechung (8) in Bereichen korrespondierender Anschläge (9,9') angeordneter Kontaktflächen (5,6) miteinander verschweißt werden, wobei
die beiden Kunststoffteile (1,2 bzw.3,4) mittels einer andererseits der Durchbrechung (8) angeordneten Spanneinrichtung (7) zur LaserSchweißung in den Kontaktflächen (5,6) gegeneinander gepresst werden.

2. Verfahren nach Anspruch 1, **dadurch gekennzeichnet, dass** die Anschläge (9,9') zumindest abschnittsweise mit einer kegelstumpfartigen Kontur ausgebildet werden, wobei
die Kontaktfläche (5) eines räumlich gekrümmten Lufttrichters (4) an einem umlaufenden Ring (11) angeordnet wird, dem
jenseits der Durchbrechung (8) am Lufttrichter (4) ein Gewinde (12) für eine zum Verbleib nach der Laser-Durchstrahlschweißung vorgesehene Überwurfmutter (13) als Spanneinrichtung (7) zugeordnet wird.

3. Verfahren nach Anspruch 2, **dadurch gekennzeichnet, dass** jeder Lufttrichter (4) motoranschlussseitig mit einem gummiartigen Entkoppelungselement (14) ausgerüstet wird, das mittels einer Schlauchschelle (15) fixiert der Lagesicherung der als Überwurfmutter (13) gestalteten Spanneinrichtung (7) dient.

## Claims

1. A method of producing an intake plenum casing from plastics material parts by laser beam welding,
wherein a tubular plastics material part (2) of the intake plenum casing (3) is inserted through a second wall-like plastics material part (1) of the casing (3) substantially without clearance through an aperture (8) in the plastics material part (1), and
the two plastics material parts (1, 2) are held clamped to one another via contact surfaces (5, 6) for autogenously connecting and welded by laser, such that
the outer periphery of the tubular plastics material part (2) in the aperture (8) in the wall-like plastics material part (1) is autogenously connected by a laser beam outwardly through the wall of the tubular plastics material part (2),
**characterised in that**
the wall-like plastics material part (1) is a two-part intake plenum casing (3) for an internal combustion engine and the tubular part (2) is a venturi (4) which extends through a separate part of the casing (3) via the aperture (8), the construction being such that
the two plastics material parts (1, 2 or 3, 4) are welded together on one side of the aperture (8) at contact surfaces (5, 6) disposed in the region of corresponding abutments (9, 9'), wherein
the two plastics material parts (1, 2 or 3, 4) are pressed against one another by a clamping device (7) disposed on the other side of the aperture (8) for the purpose of laser welding at the contact surfaces (5, 6).

2. A method according to claim 1, **characterised in that** the abutments (9, 9') at least in part are given a frusto-conical contour, wherein
the contact surfaces (5) of a venturi (4) curved in three dimensions are disposed in a peripheral ring (11), associated
on the other side of the aperture (8) with a screw thread (12) on the venturi (4) for a clamping device (7) in the form of a cap nut (13) so that it remains after the laser beam welding.

3. A method according to claim 2, **characterised in that** each venturi (4), on the side connected to the engine, is connected to a rubber uncoupling element (14) fixed by a hose band clip (15) so as to secure the clamping device (7) in the form of a cap nut (13) in position.

## Revendications

1. Procédé de fabrication d'un boîtier de collecteur d'air constitué de pièces en matière plastique soudées par laser, une pièce plastique tubulaire (2) du boîtier de collecteur d'air (3), une autre pièce plastique (1), de type paroi, du boîtier de collecteur (3) traversant essentiellement sans jeu un ajour (8) dans la pièce plastique (1), et
les deux pièces plastiques (1, 2) étant maintenues serrées l'une contre l'autre par des surfaces de contact (5, 6) à relier par complémentarité de matières par soudage laser de telle sorte que la pièce plastique tubulaire (2) soit reliée par complémentarité de matières, sur la périphérie extérieure, dans l'ajour (8) de la pièce plastique (1) de type paroi, par un rayon laser traversant la paroi de la pièce plastique tubulaire (2) de l'intérieur vers l'extérieur,
**caractérisé en ce qu'**
on choisit, comme pièce plastique de type paroi (1) un boîtier de collecteur d'air (3) en deux parties pour un moteur à combustion interne et, comme pièce plastique tubulaire (2) une prise d'air (4) traversant une partie séparée du boîtier de collecteur d'air (3) par l'ajour (8), de manière à ce que les deux pièces plastiques (1, 2 ou 3,4), d'un côté de l'ajour (8) soient soudées ensemble au niveau de butées correspondantes (9, 9') des surfaces de contact (5, 6), les deux pièces plastiques (1, 2 ou 3, 4) étant pressées l'une contre l'autre au moyen d'un dispositif de serrage (7), disposé de l'autre côté de l'ajour (8), pour le soudage laser dans les surfaces de contact (5, 6).

2. Procédé selon la revendication 1,
**caractérisé en ce que**
les butées (9, 9') sont tronconiques, du moins sur certaines sections, la surface de contact (5) d'une prise d'air (4) cintrée étant disposée sur une bague périphérique (11), à laquelle est associée, de l'autre côté de l'ajour (8), sur la prise d'air (4), une partie filetée (12) pour un écrou-raccord (13), prévu pour rester après le soudage laser, en tant que dispositif de serrage (7).

3. Procédé selon la revendication 2,
**caractérisé en ce que**
chaque prise d'air (4) est équipée, côté raccordement au moteur, d'un élément de découplage (14) de type caoutchouc qui, fixé au moyen d'un collier de serrage (15), sert à assurer la position du dispositif de serrage (7) en forme d'écrou-raccord (13).
